# EUROPÄISCHE PATENTSCHRIFT

(11) **EP 1 004 080 B1**
(45) Veröffentlichungstag und Bekanntmachung des Hinweises auf die Patenterteilung: **19.05.2004**
(21) Anmeldenummer: 98948722.8
(22) Anmeldetag: 04.08.1998
(51) Int. Cl.: G06F 15/00

(54) **VERFAHREN UND ANORDNUNG ZUR DURCHFÜHRUNG VON ÜBERWACHUNGS- UND MANAGEMENTFUNKTIONEN IN NETZEN MIT ÜBERWACHTEN KOMPONENTEN**
PROCESS AND SYSTEM FOR CARRYING OUT MONITORING AND MANAGEMENT FUNCTIONS IN NETWORKS WITH MONITORED COMPONENTS
PROCEDE ET SYSTEME POUR EFFECTUER DES FONCTIONS DE SURVEILLANCE ET DE GESTION DANS DES RESEAUX AVEC DES COMPOSANTS CONTROLES

(30) Priorität: 19.08.1997 DE 19735947
(43) Veröffentlichungstag der Anmeldung: 31.05.2000
(73) Patentinhaber: Fujitsu Siemens Computers GmbH, 80807 München (DE)
(72) Erfinder: KRÖNERT, Günther, D-82024 Taufkirchen (DE); BÖHME, Alfred, D-84419 Schwindegg (DE); RANDELZOFER, Manfred, D-86343 Königsbrunn (DE)
(74) Vertreter: Epping, Hermann, Fischer
(86) Internationale Anmeldenummer: PCT/DE1998/002238
(87) Internationale Veröffentlichungsnummer: WO 1999/009489

(56) Entgegenhaltungen:
- "ADVERTISEMENT" DATA COMMUNICATIONS, Bd. 22, Nr. 3, 1. Februar 1993, Seiten 45-46, XP000343212
- HARITSA J R ET AL: "MANDATE: MANAGING NETWORKS USING DATABASE TECHNOLOGY" IEEE JOURNAL ON SELECTED AREAS IN COMMUNICATIONS, Bd. 11, Nr. 9, 1. Dezember 1993, Seiten 1360-1372, XP000491494

## Beschreibung

Die Erfindung betrifft ein Verfahren und eine Anordnung zur Durchführung von Überwachungs- und Managementfunktionen in Netzen mit überwachten Komponenten nach den Merkmalen der Oberbegriffe von Anspruch 1 und 3. Ein derartiges Verfahren ist im Prinzip aus dem Dokument Data Communications International, Bd. 22, Nr. 3, Februar 1993, Seiten 45, 46: "Net Management Data Goes to Work", bekannt.

Ferner ist aus IEEE Journal on Selected Areas in Communications, Bd. 11, Nr. 9, Dezember 1993, Seiten 1360 bis 1372: , MANDATE: MAnaging Networks Using DAtabase TEchnology' ein ähnliches Verfahren bekannt, bei dem die Management Information Base MIB als eine Datenbank verwendet wird, die ein Modell des gesamten Netzwerks ist. Der Administrator verändert die Datenbank und beeinflusst damit indirekt das Netzwerk. Mit der zunehmenden Vernetzung von Rechnern wurde es nötig, sowohl die Rechner als auch die anderen Komponenten des Netzes zu überwachen und gegebenenfalls zu steuern. Dieses Netz/Systemmanagement wurde im Prinzip mit folgenden Einrichtungen durchgeführt: Eine Administratorkonsole, die auch in Software realisiert sein kann, kommuniziert mit Agenten (Software) auf den zu überwachenden Komponenten. Die Agenten liefern auf Anforderung Informationen, wie Temperatur, Rechnerauslastung usw., an die Administratorkonsole. Die Administratorkonsole stellt diese Informationen dar, woraufhin der Administrator gegebenenfalls Aktionen auf den Komponenten starten kann. Dabei wird durch die Eingaben des Administrators an der Konsole eine Nachricht an den Agenten der entsprechenden Komponente gesandt, der dann entsprechende Veränderungen an der Komponente durchführt.

### Beschreibung

Ursprünglich wurden für die Realisierungen solcher Management-Lösungen proprietäre Protokolle und proprietäre Schnittstellen verwendet. Seit mehr als fünf Jahren steht das sogenannte "Simple Network Management Protocol" als genormtes Protokoll SNMP für die Realisierung von Managment-Applikationen zur Verfügung. Ein Überblick über SNMP wird zum Beispiel in G. Krönert, *Erweiterbarkeit von SNMP-Agenten, Teil 1: SNMP und SNMPv2,* unix/mail 12 (1994) 1, S. 20-24 gegeben.

Ursprünglich wurden für die Realisierungen solcher Management-Lösungen proprietäre Protokolle und proprietäre Schnittstellen verwendet. Seit mehr als fünf Jahren steht das sogenannte "Simple Network Management Protocol' als genormtes Protokoll SNMP für die Realisierung von Managment-Applikationen zur Verfügung. Ein Überblick über SNMP wird zum Beispiel in G. Krönert, *Erweiterbarkeit von SNMP-Agenten, Teil 1: SNMP und SNMPv2*, unix/mail 12 (1994) 1, S. 20-24 gegeben. Dabei stellte sich heraus, daß im Prinzip keine wesentlichen Unterschiede zwischen Netz-, System-, Geräte- oder Applikationsmanagement bestehen. In allen Fällen muß Information zwischen der überwachten Komponente und der Administratorkonsole ausgetauscht werden. Die überwachte Komponente kann daher ein Gerät, ein Rechner oder eine Applikation sein.

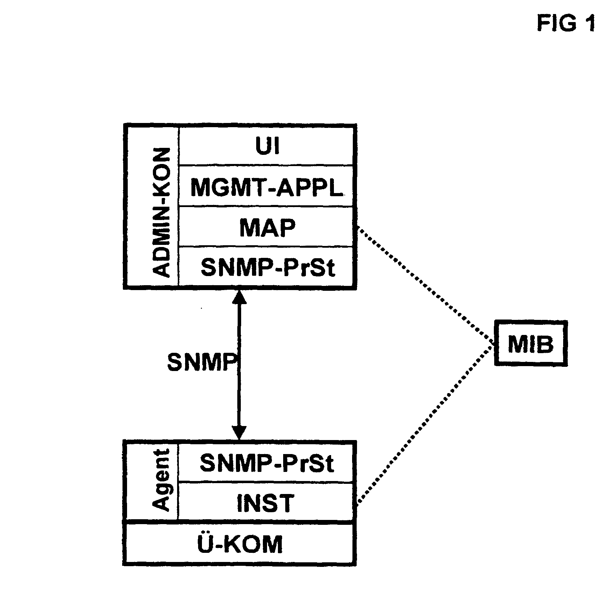

FIG 1 zeigt das Prinzip einer SNMP-basierten Managementlösung. Dem Administrator steht die Administratorkonsole ADMIN-KON zur Verfügung. Wählt er in dem sogenannten User Interface UI eine in der Management-Applikation MGMT-APPL implementierte Funktion aus, so muß die Abbildungskomponente MAP die von dieser Funktion benötigten Daten auf einfache SNMP-Objekte abbilden und über den Protokollstack SNMP-PrSt von der überwachten Komponente anfordern. Auf der überwachten Komponente Ü-KOM läuft ein Agent. Dieser besteht aus dem Protokollstack SNMP-PrSt und der Instrumentierung INST, die auf die Daten der Komponente Ü-KOM zugreift. Von der Instrumentierung INST laufen die Daten dann auf diesem Weg wieder zurück zur Konsole ADMIN-KON, wo sie dann wieder von der Abbildungskomponente MAP zu der von der Management-Applikation MGMT-APPL benötigten Information zusammengestellt werden. Das User Interface UI stellt die Daten dann graphisch dar.

SNMP transportiert einfache Objekte, die durch Name und Wert beschrieben werden. SNMP ist flexibel verwendbar, weil die Objekte, die übertragen werden, nicht genormt sind, sondern in sogenannten Management Information Bases MIB formal beschrieben werden. Die Semantik der Objekte ist verbal beschrieben. Soll zum Beispiel ein neues Gerät über SNMP überwacht und gesteuert werden, so muß eine entsprechende MIB definiert sein. Die MIB beeinflußt deshalb die beiden Module Instrumentierung INST und Abbildungskomponente MAP, d.h. zur Unterstützung einer neuen MIB müssen diese Module neu entwikkelt werden.

Die Abbildungskomponente MAP erfüllt hauptsächlich zwei Aufgaben:
- Zahlreiche einfache, über SNMP empfangene Objekte müssen für die Managementapplikation MGMT-APPL zusammengestellt werden, damit sie dann als Tabelle, Formular, Charts usw. dargestellt werden können. Dabei werden oft Daten, die in verschiedenen MIBs definiert sind, auf dem gleichen Bildschirm dargestellt. Auch müssen von der Abbildungskomponente MAP die Daten für verschiedene Funktionen der Managementapplikationen MGMT-APPL in der Regel unter schiedlich zusammengestellt werden; für die Überwachung auf der Konsole durch den Administrator müssen die Daten anders zusammengestellt werden als für die Erzeugung eines Reports.
- Um die Netzbelastung gering zu halten und um die Antwortzeiten an die Administratorkonsole ADMIN-KON zu verbessern, ist es zweckmäßig, Daten - soweit möglich - in der Abbildungskomponente MAP zwischenzuspeichern. Kandidaten für dieses Zwischenspeichern sind z.B. Konfigura tionsdaten, die sich nach dem Hochfahren des Rechners nicht mehr ändern, oder Daten, die im laufenden Betrieb erzeugt werden und sich nicht mehr ändern, wie Log-Messages, Fehlermeldungen oder Statistiken.

Bei bisherigen Lösungen sind diese Aufgaben durch die Realisierung der Module für die Abbildungskomponente MAP und für die Managementapplikationen MGMT-APPL in einer Programmiersprache gelöst worden. Lediglich sog. MIB-Browser können zwar automatisch aus der MIB erzeugt werden, jedoch können sie die in der MIB definierten Daten nur 1:1 tabellarisch darstellen, so daß für MIB-Browser kein MAP-Modul benötigt wwird. Ein beliebiges Zusammenstellen und Verknüpfen der Daten ist deshalb nicht möglich.

Neuere Ansätze befinden sich derzeit in der Erprobung. Sie sind dadurch gekennzeichnet, daß sie Modelle mit komplexen Objekten verwenden. Im Gegensatz zu einfachen Objekten, die nur durch Name und Wert beschrieben werden, haben komplexe Objekte Attribute mit Werten, ausführbare Methoden, Beziehungen zu anderen Objekten, und sie sind Exemplare von Klassen. Zwei derartige Ansätze werden zur Zeit entwickelt und erprobt: Java Management API (JMAPI) und Web-based Enterprise Management (WBEM). Information über JMAPI und WBEM stehen im Web zur Verfügung unter:
- http://java.sun.com/products/JavaManagement/documents/architecture/html/jmapi-arch.html (JMAPI)
- http:// wbem.freerange.com/wbempdk (WBEM)

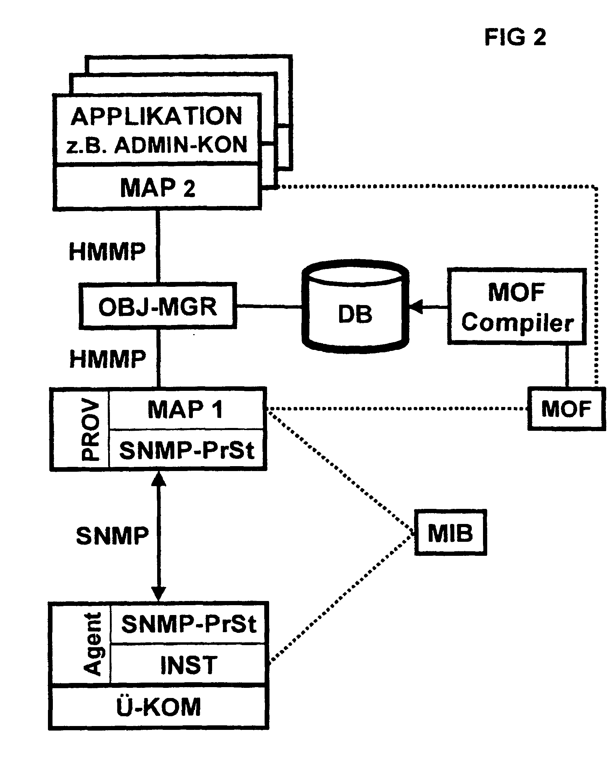

FIG 2 zeigt diese Architektur am Beispiel von WBEM. Da SNMP breite Akzeptanz gefunden hat und bereits einige Zehntausend SNMP-Objekte in Hunderten von MIBs definiert sind, müssen diese Investitionen auch bei den neuen Ansätzen integrierbar sein. Deshalb wird auch in diesen Ansätzen über SNMP auf die überwachten Komponenten Ü-KOM zugegriffen.

Die zentrale Komponente dieses Ansatzes ist der Objekt-Manager OBJ-MGR (bei WBEM: HMOM (Hypertext Management Object Manager; bei JMAPI: Managed Objects Factory). Die komplexen Objekte einer Managementlösung werden von einem festgelegten Informationsmodell, dem sogenannten Common Information Modell CIM abgeleitet. Es definiert die Klassen der oberen Ebenen einer Klassenhierarchie. Für eine Realisierung müssen entsprechende Subklassen von dieser Hierarchie abgeleitet werden. Das CIM definiert Klassen für Objekte und Klassen für Assoziationen. Das CIM wird von der sogenannten Desktop Management Task Force (DMTF) festgelegt; genauere Informationen findet man im Web unter http:// wbem.freerange.com/wbempdk.

Beispiele für im CIM definierte Objektklassen sind *"Managed System Element", "Physical Container", "Physical Element"* oder *"Disk"*. Davon kann dann zum Beispiel eine Subklasse für eine spezielle Festplatte abgeleitet werden. Beispiele für Assoziationen sind *"Components*"*, "Dependency*" oder *"Contains"*. Für ein konkretes Management müssen auch hiervon Subklassen abgeleitet werden. Daß CIM jedoch keineswegs das einzige mögliche Informationsmodell ist, zeigt die Tatsache, daß JMAPI ein anderes Informationsmodell verwendet.

Der Objekt-Manager OBJ-MGR bietet den Zugriff auf diese komplexen Objekte. Er wird gesteuert von den Definitionen der komplexen Objekte, die sich in der Datenbank DB befinden. Solche Definitionen können von den vorgegebenen CIM-Klassen abgeleitet und als sogenannte Managed Object Files MOF erzeugt werden. MOFs können über den MOF-Compiler in die Datenbank DB eingelesen werden. In der Datenbank DB kann der Objekt-Manager OBJ-MGR auch statische Objekte ablegen. Sowohl Applikationen wie auch Provider PROV greifen über das Protokoll HMMP (Hypermedia Management Protocol) auf komplexe Objekte zu. HMMP kommuniziert komplexe Objekte und bietet unter anderem folgende Typen von Operationen:
- Manipulation von Klassen: Get, Delete, Put, Enumerate
- Manipulation von Instanzen: Get, Delete, Put, Enumerate
- Aufruf von Methoden: Execute

HMMP ist noch nicht als Draft RFC bei der IETF eingereicht und es bleibt abzuwarten, ob sich dieser Standard durchsetzt. Bei der derzeitigen WBEM-Realisierung wird deshalb eine proprietäre Kommunikation verwendet. (JMAPI verwendet Java Remote Invocation Methode (RMI)).

Auch hier gilt, daß die Information, die verschiedene Applikationen benötigen, nicht unbedingt so strukturiert ist, wie das vom Objekt-Manager OBJ-MGR verwendete Informationsmodell. Wenn eine Funktion einer Applikation aufgerufen wird, so muß die von ihr benötigte Information im allgemeinen durch die Abbildungskomponente MAP2 auf die komplexen Objekte des Objekt-Managers OBJ-MGR abgebildet werden, bevor dann entsprechende HMMP Request an den Objekt-Manager OBJ-MGR geschickt werden. (Nur ein MOF-Browser kommt ohne MAP2 aus.) Empfängt der Objekt-Manager OBJ-MGR einen solchen HMMP-Request, dann versucht er zunächst, das Objekt aus der Datenbank DB zu lesen. Ist dort das Objekt nicht abgespeichert, dann steht in der Datenbank DB die Information, über welchen Provider PROV die Daten von der überwachten Komponente Ü-KOM abgerufen werden können. Der Objekt-Manager OBJ-MGR schickt dann einen HMMP-Request an diesen Provider.

Da HMMP komplexe Objekte kommuniziert, ist der weitere Ablauf folgendermaßen: Die Abbildungskomponente MAP1 zerlegt die Anforderung nach einem komplexen Objekt in entsprechende Anforderungen nach einfachen in einer MIB definierten Objekten und schickt über den Protokollstack SNMP-PrSt entsprechende SNMP-Requests an die überwachte Komponente Ü-KOM. Diese antwortet mit sogenannten SNMP-Responses, deren Daten dann von dem Protokollstack SNMP-PrSt des Porviders PROV ausgepackt werden. Die Abbildungskomponente MAP1 hat nun die Aufgabe, aus diesen Daten das entsprechende komplexe Objekt zusammenzubauen und als Antwort auf den HMMP-Request an den Objekt-Manager OBJ-MGR zu schicken. Deshalb ist die Realisierung des Modules für die Abbildungskomponente MAP1 sowohl von den MIBs wie auch von den Definitionen der komplexen Objekte in den MOFs abhängig. Der Objekt-Manager OBJ-MGR schickt die Information dann an die Applikation, wo die Abbildungskomponente MAP2 aus den komplexen Objekten die von der Applikation angeforderte Information zusammenstellen muß. Beide Abbildungskomponenten MAP1 und MAP2 sind von den Definitionen der komplexen Objekte in den MOFs abhängig.

Die Vorteile dieses Ansatzes bestehen darin,
- daß eine darauf aufgebaute Lösung Informationen mit an deren Lösungen über HMMP austauschen kann. Dieser Vorteil kommt jedoch nur dann zum Tragen, wenn HMMP ein ge normtes Protokoll ist,
- daß eine lokale Managementlösung auf einem allgemein verwendbaren CIM-orientierten Framework (WBEM: WBEM Pro fessional Developer's Kit) aufgebaut werden kann.

Der Einsatz eines Objekt-Managers OBJ-MGR mit einem vorgegebenen Modell auf der Basis komplexer Objekte führt jedoch auch zu folgenden Problemen:
- Es ist zu beachten, daß auch bei Verwendung eines Frame works für jeden Provider PROV und jede Applikation zwei entsprechende Abbildungskomponenten MAP zu realisieren sind, die relativ komplex sind.
- Weiterhin kann das zweimalige Mapping zwischen überwachter Komponente Ü-KOM und der APPLIKATION zu In formationsverlusten führen und die Leistungsfähigkeit des Systems beeinträchtigen.
- Es gibt nur statische und dynamische Objekte. Statische Objekte werden in MOFs beschrieben und über den MOF-Compiler in der Datenbank DB abgespeichert. Dynamische Objekte werden immer über den Provider PROV angefordert. Eine flexiblere Bereitstellungs-Strategie wird nicht unterstützt.

Die Erfindung bezweckt nun, die genannten Nachteile dadurch zu vermeiden, dass die Applikation bzw. die Administratorkonsole der aktive Teil ist, der die Daten von der Bereitstellungseinheit anfordert, wobei die Bereitstellungseinheit entscheidet, wie die Daten zu beschaffen sind.

Die Lösung dieser Aufgabe ergibt sich erfindungsgemäß durch die Merkmale des Anspruchs 1.

Der besondere Vorteil der Erfindung besteht darin, dass die Bereitstellungseinheit unabhängig von den in der jeweiligen Managementlösung verwendeten MIBs ist, da die in einer Datei (MIB+) enthaltenen und gegebenenfalls durch weitere Steuerfunktionen ergänzten Definitionen der verwendeten einfachen Objekte ebenfalls in die relationale Datenbank (REL-DB) übernommen werden und einerseits in der Initialisierungsphase den Aufbau der Tabellenstrukturen für die Managementdaten (MGMT-DATA) steuern und andererseits als Steueranweisungen (META-DATA) für die Bereitstellungseinheit (C&CM) die Bearbeitung der Auswahlbefehle (SQL-SELECT) ermöglichen.

In vorteilhafter Weiterbildung der Erfindung ist vorgesehen, dass den Objektdefinitionen Attribute als weitere Steuerfunktion beigefügt werden, die beim Zugriff auf ein Objekt oder eine Objektgruppe festlegt, wie die Bereitstellungseinheit bezüglich der Zurverfügungstellung der notwendigen Informationen für einen Auswahlbefehl zu reagieren hat.

Analoges gilt für eine entsprechend gestaltete Anordnung entsprechend den Patentansprüchen 3 und 4.

Einzelheiten der Erfindung seien nachfolgend an Hand eines in der Zeichnung dargestellten Ausführungsbeispieles näher erläutert. Im einzelnen zeigen
- FIG 1: das Prinzip einer SNMP-basierten Managementlösung gemäß dem Stand der Technik,
- FIG 2: das Prinzip einer Managementlösung gemäß der WBEM-Architektur entsprechend dem Stand der Technik und
- FIG 3: das Prinzip der Managementlösung gemäß der Erfin dung.

Die Figuren FIG 1 und FIG 2 sind bereits im Rahmen der Erläuterung des Standes der Technik beschrieben worden.

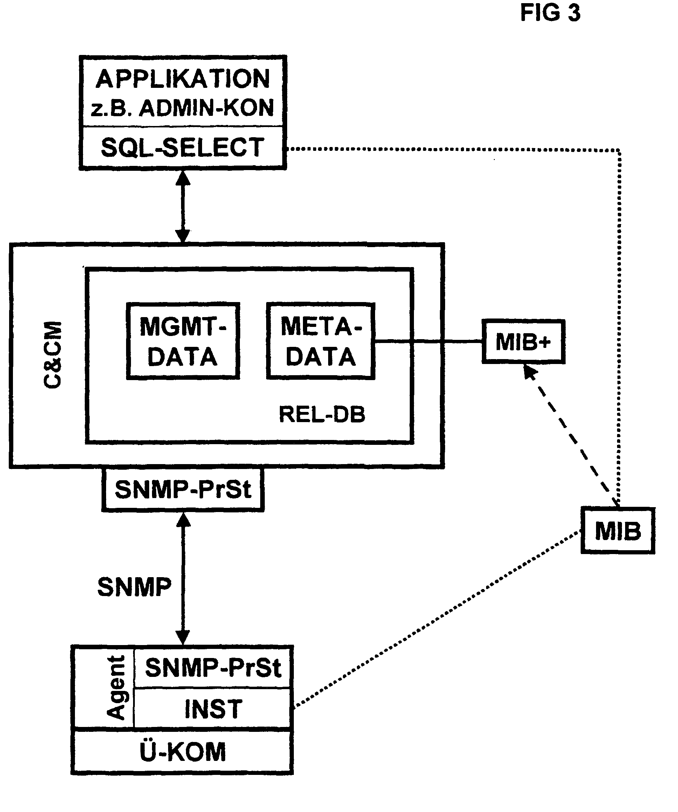

Bei der Managementlösung gemäß FIG 3 bildet eine Bereitstellungseinheit C&CM mit einer relationalen Datenbank REL-DB den Kern. Die Erfindung nutzt dabei die Tatsache, daß relationale Datenbanken die Daten in Form von Tabellen abspeichern. Der Zugriff erfolgt über Auswahlbefehle SQL-SELECT der SQL-Sprache, wobei durch die Angabe von Bedingungen festgelegt wird, welche Daten der Auswahlbefehl SQL-SELECT liefert. Mit einem solchen Auswahlbefehl kann auch ein Zugriff auf eine Verknüpfung von mehreren Tabellen erfolgen. Dabei werden durch den JOIN-Operator zwei Tabellen gemäß den angegeben Bedingungen miteinander zu einer neuen Tabelle verknüpft. Durch die Schachtelung von JOIN-Operatoren lassen sich im Prinzip beliebig viele Tabellen miteinander verknüpfen. Das Ergebnis eines SELECT-Statements ist schließlich wieder eine Tabelle. Ein Überblick über SQL findet sich in Marc Adler, "Eine kurze Einführung in die SQL-Sprache", Microsoft System Journal: Special Database, Herbst/Winter 93.

Eine weitere Basis der Erfindung ist die Idee, einfache Objekte 1:1 in der relationalen Datenbank abzuspeichern. Jede Applikation kann sich dann mit Hilfe von Auswahlbefehlen SQL-SELECT die Informationen aus der Datenbank holen, die sie benötigt. Dabei können Informationen problemlos aus verschiedenen MIBs verknüpft werden, weil die Daten jeder MIB in Form einer oder mehrerer Tabellen in der REL-DB abgelegt sind. Zugleich kann die Bereitstellungseinheit C&CM mit der Datenbank REL-DB eine flexible Caching-Strategie unterstützen.

Um die Arbeitweise einer solchen Managementlösung zu erklären, werden im folgenden zwei Vorgänge detailliert beschrieben, nämlich das Einrichten der Datenbank durch die Bereitstellungseinheit C&CM und eine SQL-Abfrage von einer Applikation.

### Einrichten der relationalen Datenbank REL-DB:

MIBs definieren in einer formalen Beschreibung die SNMP-Objekte. Es gibt sogenannte MIB-Compiler, die daraus Tabellen erzeugen, die geeignet sind, von Computerprogrammen gelesen und interpretiert zu werden. Für die Bereitstellungseinheit C&CM können zu diesen vom MIB Compiler erzeugten Tabellen manuell weitere Objektmerkmale hinzugefügt werden, wie die Caching-Kategorie. Diese Tabellen sind in FIG 3 als MIB+ bezeichnet. Der Wert dieses Merkmals bestimmt dann, wie die Bereitstellungseinheit C&CM Zugriffe auf dieses einfache Objekt behandelt. MIB+ enthält also sämtliche Informationen, die zum Einrichten der relationalen Datenbank REL-DB benötigt werden.

In der Initialisierungsphase liest die Bereitstellungseinheit C&CM die MIB+ ein, richtet die Tabellenstrukturen für die Managementdaten MGMT-DATA ein und legt die beschreibende Information als META-DATA ab. META-DATA enthält zum Beispiel für jedes einfache Objekt die Information, wie in der relationalen Datenbank REL-DB darauf zugegriffen wird, wie über SNMP darauf zugegriffen wird, die Caching-Kategorie, usw. Durch die Informationen META-DATA ist die Implementierung der Bereitstellungseinheit C&CM völlig unabhängig von den in der Managementlösung verwendeten MIBs. Andererseits wird das Verhalten der Bereitstellungseinheit C&CM von diesen Informationen gesteuert, so daß die Bereitstellungseinheit C&CM nach dem Erzeugen dieser Informationen in der relationalen Datenbank REL-DB für die Applikationen bereit ist.

### Abfrage durch die Applikation:

Wird in einer APPLIKATION eine bestimmte Funktion aufgerufen, so fordert sie über einen Auswahlbefehl SQL-SELECT an die Bereitstellungseinheit C&CM die benötigte Information an. Die Bereitstellungseinheit C&CM analysiert dann, welche der Managementdaten MGMT-DATA von dem Auswahlbefehl SQL-SELECT direkt oder indirekt durch eine SQL-JOIN-Operation betroffen sind. Weiterhin wird an Hand der zugehörigen Information META-DATA geprüft, ob auf die in der Datenbank bereis abgespeicherten Managementdaten MGMT-DATA zugegriffen werden kann oder ob diese erst von den überwachten Komponenten Ü-KOM anzufordern sind. Ist letzteres der Fall, dann sendet die Bereitstellungseinheit C&CM über den Protokollstack SNMP-PrSt entsprechende SNMP-Requests an die überwachten Komponenten Ü-KOM und trägt die über SNMP-Responses erhaltenen Daten MGMT-DATA in die Datenbank REL-DB ein. Wenn alle betroffenen Daten vorliegen, läßt die Bereitstellungseinheit C&CM den Auswahlbefehl SQL-SELECT von der Datenbank REL-DB ausführen und liefert das Ergebnis an die APPLIKATION.

Dieser Lösungsansatz ist nicht darauf beschränkt, daß die überwachten Komponenten Ü-KOM die Managementdaten über SNMP liefert. Jede andere Form zur Übertragung einfacher Objekte - bestehend aus Name und Wert - kann verwendet werden. Ein anderes Beispiel ist DMI (Desktop Management Interface), eine von der DMTF (Desktop Management Task Force) genormte Schnittstelle zur Übertragung von einfachen Objekten, die in MIFs (Management Information Files) definiert werden.

## Patentansprüche

1. Verfahren zur Durchführung von Überwachungs- und Managementfunktionen in Netzen mit überwachten Komponenten (Ü-KOM) unter Verwendung einfacher Objekte für den Informationsaustausch zwischen den überwachten Komponenten (Ü-KOM) und einer Abfrageeinheit (ADMIN-KON), wobei die Informationen in beliebig ausgewählter Kombination an der Abfrageeinheit präsentiert, verändert und zur Einstellung der überwachten Komponenten (Ü-KOM) verwendet werden, wobei die Verbindung der Abfrageeinheit (ADMIN-KON) mit den überwachten Komponenten (Ü-KOM) über eine gesonderte Bereitstellungseinheit (C&CM) durchgeführt wird, der Informationsaustausch zwischen der Bereitstellungseinheit (C&CM) und den überwachten Komponenten (Ü-KOMP) mittels einfacher Objekte erfolgt und alle diese Objekte in einer relationalen Datenbank (REL-DB) der Bereitstellungseinheit (C&CM) gespeichert werden, während die Abfrageeinheit (ADMIN-KON) mit Auswahlbefehlen (SQL-SELECT) der SQL-Sprache auf die relationale Datenbank (REL-DB) zugreifen und dort gespeicherte Managementinformationen (MGMT-DATA) in beliebig auswählbarer Kombination abrufen kann,
**dadurch gekennzeichnet, daß** die in einer Datei (MIB+) enthaltenen und gegebenenfalls durch weitere Steuerfunktionen ergänzten Definitionen der verwendeten einfachen, durch Name und Wert beschriebenen Objekte ebenfalls in die relationale Datenbank (REL-DB) übernommen werden und einerseits in der Initialisierungsphase den Aufbau der Tabellenstrukturen für die Managementdaten (MGMT-DATA) steuern und andererseits als Steueranweisungen (META-DATA) für die Bereitstellungseinheit (C&CM) die Bearbeitung der Auswahlbefehle (SQL-SELECT) ermöglichen.

2. Verfahren nach Anspruchl,
**dadurch gekennzeichnet, daß** als weitere Steuerfunktion den Objektdefinitionen ein Attribut beigefügt ist, das beim Zugriff auf ein Objekt oder eine Objektgruppe festlegt, wie die Bereitstellungseinheit (C&CM) bezüglich der Zurverfügungstellung der notwendigen Informationen für einen Auswahlbefehl (SQL-SELECT) zu reagieren hat.

3. Anordnung zur Durchführung von Überwachungs- und Managementfunktionen in Netzen mit überwachten Komponenten (Ü-KOM) unter Verwendung einfacher, durch Name und Wert beschriebener Objekte für den Informationsaustausch zwischen den überwachten Komponenten (Ü-KOM) und einer Abfrageeinheit (ADMIN-KON) mit Einrichtungen zur Präsentation der Informationen in beliebig ausgewählter Kombination, zur Änderung der Information und zur Einstellung der überwachten Komponenten (Ü-KOM) an Hand vorgegebener Informationen, sowie mit einer gesonderten Bereitstellungseinheit (C&CM) einschließlich einer relationalen Datenbank (REL-DB) zur Speicherung der Objekte, wobei die Bereitstellungseinheit (C&CM) mit den überwachten Komponenten (Ü-KOM) über Einrichtungen zum Informationsaustausch mittels einfacher Objekte (SNMP-PrSt) und mit der Abfrageeinheit (ADMIN-KON) über Einrichtungen zur Bereitstellung von Managementdaten (MGMT-DATA) aus der relationalen Datenbank (REL-DB) in beliebig auswählbarer Kombination auf Grund von Auswahlbefehlen (SQL-SELECT) der SQL-Sprache gekoppelt ist,
**dadurch gekennzeichnet,**
**daß** die Bereitstellungseinheit (C&CM) weiterhin Einrichtungen zur Übernahme der Objektbeschreibungen und zum Einrichten der entsprechenden Tabellenstrukturen in der relationalen Datenbank (REL-DB) für die Managementdaten (MGMT-DATA) in der Initialisierungsphase sowie zur Speicherung von Steueranweisungen (META-DATA) für die Bereitstellungseinheit (C&CM) zur Bearbeitung der Auswahlbefehle (SQL-SELECT) aufweist.

4. Anordnung nach Anspruch 3,
**gekennzeichnet durch** Einrichtungen zur Auswertung eines der jeweiligen Objektdefintion beigefügten Attributs als weitere Steuerungsfunktion zur Beeinflussung der Bereitstellungseinheit (C&CM) bezüglich der zur Verfügungstellung der für einen Auswahlbefehl (SQL-SELECT) benötigten Managementdaten (MGMT-DATA).

## Claims

1. Method for performing monitoring and management functions in networks containing monitored components (Ü-KOM) using simple objects for the information exchange between the monitored components (Ü-KOM) and a querying unit (ADMIN-KON), where the information is presented in an arbitrarily selected combination on the querying unit, is altered and is used to set the monitored components (Ü-KOM), where the querying unit (ADMIN-KON) is connected to the monitored components (Ü-KOM) using a separate provision unit (C&CM), the information exchange between the provision unit (C&CM) and the monitored components (Ü-KOMP) takes place using simple objects, and all of these objects are stored in a relational database (REL-DB) in the provision unit (C&CM), while the querying unit (ADMIN-KON) is able to use selection commands (SQL-SELECT) from the SQL language to access the relational database (REL-DB) and to retrieve management information (MGMT-DATA) stored therein in an arbitrarily selectable combination,
**characterized in that** the definitions (contained in a file (MIB+) and possibly complemented by further control functions) of the simple objects used, which are described by name and value, are likewise transferred to the relational database (REL-DB) and firstly control the set-up of the table structures for the management data (MGMT-DATA) in the initialisation phase and secondly, as control instructions (META-DATA) for the provision unit (C&CM), allow the selection commands (SQL-SELECT) to be processed.

2. Method according to Claim 1,
**characterized in that** the further control function appended to the object definitions is an attribute which stipulates, when an object or an object group is accessed, how the provision unit (C&CM) needs to react in terms of the provision of the necessary information for a selection command (SQL-SELECT).

3. Arrangement for performing monitoring and management functions in networks containing monitored components (Ü-KOM) using simple objects, described by name and value, for the information exchange between the monitored components (Ü-KOM) and a querying unit (ADMIN-KON) with devices for presenting the information in an arbitrarily selected combination, for changing the information and for setting the monitored components (Ü-KOM) using prescribed information, and also with a separate provision unit (C&CM) including a relational database (REL-DB) for storing the objects, where the provision unit (C&CM) is coupled to the monitored components (Ü-KOM) by means of devices for information exchange using simple objects (SNMP-PrSt) and to the querying unit (ADMIN-KON) by means of devices for providing management data (MGMT-DATA) from the relational database (REL-DB) in an arbitrarily selectable combination on the basis of selection commands (SQL-SELECT) from the SQL language,
**characterized**
**in that** the provision unit (C&CM) also has devices for adopting the object descriptions and for setting up the appropriate table structures in the relational database (REL-DB) for the management data (MGMT-DATA) in the initialisation phase and also for storing control instructions (META-DATA) for the provision unit (C&CM) for the purpose of processing the selection commands (SQL-SELECT).

4. Arrangement according to Claim 3,
**characterized by** devices for evaluating an attribute appended to the respective object definition as a further control function for influencing the provision unit (C&CM) in terms of the provision of the management data (MGMT-DATA) required for a selection command (SQL-SELECT).

## Revendications

1. Procédé pour la mise en oeuvre de fonctions de surveillance et de gestion dans des réseaux avec composants surveillés (Ü-KOM) en utilisant des objets simples pour l'échange d'informations entre les composants surveillés (Ü-KOM) et une unité d'interrogation (ADMIN-KON), les informations étant présentées à l'unité d'interrogation selon une combinaison quelconque sélectionnée, étant modifiées et étant utilisées pour le réglage des composants surveillés (Ü-KOM), la liaison de l'unité d'interrogation (ADMIN-KON) avec les composants surveillés (Ü-KOM) étant mise en oeuvre par l'intermédiaire d'une unité de mise à disposition particulière (C&CM), l'échange de données entre l'unité de mise à disposition (C&CM) et les composants surveillés (Ü-KOM) s'effectuant au moyen d'objets simples et tous ces objets étant mémorisés dans une base de données relationnelle (REL-DB) de l'unité de mise à disposition (C&CM) tandis que l'unité d'interrogation (ADMIN-KON) peut accéder avec des instructions de sélection (SQL-SELECT) du langage SQL à la base de données relationnelle (REL-DB) et peut appeler des informations de gestion mémorisées là (MGMT-DATA) selon une combinaison quelconque pouvant être sélectionnée,
**caractérisé par le fait que** les définitions, contenues dans un fichier (MIB+) et éventuellement complétées par d'autres fonctions de commande, des objets simples utilisés décrits par un nom et une valeur sont également reprises dans la base de données relationnelle (REL-DB), commandent d'une part dans la phase d'initialisation la construction des structures de tableau pour les données de gestion (MGMT-DATA) et permettent d'autre part en tant qu'instructions de commande (META-DATA) pour l'unité de mise à disposition (C&CM) le traitement des instructions de sélection (SQL-SELECT).

2. Procédé selon la revendication 1,
**caractérisé par le fait qu'**il est adjoint aux définitions d'objet comme autre fonction de commande un attribut qui spécifie lors de l'accès à un objet ou à un groupe d'objets comment l'unité de mise à disposition (C&CM) a à réagir quant à la mise à disposition des informations nécessaires pour une instruction de sélection (SQL-SELECT).

3. Dispositif pour la mise en oeuvre de fonctions de surveillance et de gestion dans des réseaux avec composants surveillés (Ü-KOM) en utilisant des objets simples décrits par un nom et une valeur pour l'échange d'informations entre les composants surveillés (Ü-KOM) et une unité d'interrogation (ADMIN-KON), avec des dispositifs pour la présentation des informations selon une combinaison quelconque sélectionnée, pour la modification de l'information et pour le réglage des composants surveillés (Ü-KOM) à l'aide d'informations prédéterminées ainsi qu'avec une unité de mise à disposition particulière (C&CM) y compris une base de données relationnelle (REL-DB) pour la mémorisation des objets, l'unité de mise à disposition (C&CM) étant couplée aux objets surveillés (Ü-KOM) par l'intermédiaire de dispositifs pour l'échange d'informations au moyen d'objets simples (SNMP-PrSt) et à l'unité d'interrogation (ADMIN-KON) par l'intermédiaire de dispositifs pour la mise à disposition de données de gestion (MGMT-DATA) issues de la base de données relationnelle (REL-DB) selon une combinaison quelconque pouvant être sélectionnée en fonction d'instructions de sélection (SQL-SELECT) du langage SQL,
**caractérisé par le fait que** l'unité de mise à disposition (C&CM) comporte aussi des dispositifs pour la reprise des descriptions d'objets et pour la mise en place des structures de tableaux correspondantes dans la base de données relationnelle (REL-DB) pour les données de gestion (MGMT-DATA) dans la phase d'initialisation ainsi que pour la mémorisation d'instructions de commande (META-DATA) pour l'unité de mise à disposition (C&CM) en vue du traitement des instructions de sélection (SQL-SELECT).

4. Dispositif selon la revendication 3,
**caractérisé par** des dispositifs pour l'évaluation d'un attribut, adjoint à la définition d'objet respective, comme autre fonction de commande pour influencer l'unité de mise à disposition (C&CM) quant à la mise à disposition des données de gestion (MGMT-DATA) nécessaires pour une instruction de sélection (SQL-SELECT).
